Europäisches Patentamt

**European Patent Office**

**Office européen des brevets**

(19)

(11) Numéro de publication: **0 017 590**
**A1**

# (12) DEMANDE DE BREVET EUROPEEN

(21) Numéro de dépôt: **80400455.4**

(22) Date de dépôt: **04.04.80**

(51) Int. Cl.³: **B 01 D 50/00**
**F 24 F 3/16**

(30) Priorité: **10.04.79 FR 7909025**

(43) Date de publication de la demande:
**15.10.80 Bulletin 80/21**

(84) Etats Contractants Désignés:
**AT BE CH DE GB IT LI LU NL SE**

(71) Demandeur: **SOCIETE BOURGUIGNONNE DE MECANIQUE**
**Clenay**
**F-21490 Ruffey Les Echirey(FR)**

(72) Inventeur: **Sobole, Pierre**
**Clenay**
**F-21490 Ruffey Les Echirey(FR)**

(74) Mandataire: **Derambure, Christian**
**Cabinet BUGNION ASSOCIES SARL 116, boulevard Haussmann**
**F-75008 Paris(FR)**

(54) **Filtre pour le dépoussierage d'un fluide gazeux.**

(57) Le filtre comporte des moyens (2) de retenue des particules les plus fines, des moyens (12) d'arrêt des particules plus grosses pour les eliminer du fluide gazeux à filtrer avant qu'elles n'aient atteint la surface exterieure (10) des moyens de retenue (2)

L'invention est applicable au depoussierage d'un fluide gazeux - notamment de l'air - destiné à un appareil d'utilisation - notamment un brûleur à gaz.

FIG. 1

EP 0 017 590 A1

1

Filtre pour le dépoussièrage d'un fluide gazeux.

La présente invention concerne des perfectionnements aux filtres pour le dépoussiérage d'un fluide gazeux - notamment de l'air -.

On connaît déjà des filtres pour le dépoussiérage d'un fluide gazeux - notamment de l'air - qui comportent un média filtrant de caractéristiques spécifiques, associé à un appareil d'utilisation. Le fluide gazeux chargé des particules ou poussières à éliminer devant alimenter cet appareil est contraint de traverser le média à l'intérieur duquel sont retenues notamment les particules les plus fines. Les particules plus grosses ne traversent généralement pas ou peu le média filtrant et sont donc arrêtées par sa surface extérieure ce qui le plus souvent a pour effet d'encrasser le média filtrant bien avant que ses possibilités de retenue effectives soient totalement épuisées. D'autre part, on sait que dans les filtres du type indiqué plus haut on vise une solution de compromis tenant compte notamment de deux paramètres essentiels distincts à savoir d'une part la surface du média filtrant qui est en relation avec la quantité totale de particules susceptibles d'être potentiellement "stockées" par ce média filtrant et, d'autre part, la vitesse de pénétration à laquelle ces particules traversent le média filtrant qui est en relation avec le pouvoir de pénétration de ces particules dans le média et donc avec le degré d'utilisation effective du média filtrant, dans son épaisseur. Or, dans les filtres connus du type indiqué et pour un débit de fluide gazeux filtré donné, ce compromis pourtant nécessaire est généralement très mal atteint, soit que l'on privilégie la surface du filtre ce qui a notamment une double consé-

2

quence négative à savoir d'une part l'encombrement et d'autre part la diminution de la vitesse de pénétration donc une moins bonne utilisation du filtre dans son épaisseur, soit que l'on privilégie la vitesse de pénétration auquel cas la quantité totale de particules stockables dans le média filtrant reste très limitée. Ainsi, en toute occurrence, le filtre n'est pas utilisé de façon optimale et/ou sa durée de vie est très limitée avec dans tous les cas les inconvénients que cela comporte.

La présente invention a pour but de pallier les différents inconvénients en proposant un filtre pour le dépoussiérage d'un fluide gazeux - notamment de l'air - comportant des moyens de retenue des particules les plus fines véhiculées par le fluide à filtrer et en combinaison avec eux des moyens d'arrêt des particules plus grosses pour les éliminer du fluide gazeux à filtrer avant qu'elles n'aient atteint la surface extérieure des moyens de retenue des particules plus fines, caractérisé par le fait que les moyens d'arrêt constituent également, en combinaison avec les moyens de retenue, des moyens de déflection propres à créer un gradient de la vitesse de pénétration du fluide gazeux à filtrer dans les moyens de retenue, créant des trajets préférentiels de passage dans le média filtrant, ces trajets et de ce fait des zones de filtration différentes étant mis en oeuvre de façon sectorielle et successive variable dans le temps et progressivement, pour assurer une durée de vie prolongée du filtre et sa meilleure utilisation.

On observera que les perfectionnements selon l'invention sont applicables à un filtre traditionnel, connu en soi, du type sus-mentionné. Grâce à ces perfectionnements, le média filtrant est colmaté par zones successives, chaque zone étant abandonnée après utilisation optimale, ce qui conduit donc effectivement à une augmentation importante de la durée de vie du filtre et à sa meilleure utilisation. Par ailleurs, les perfectionnements apportés accroissent la rigidité et la protection mécaniques du média filtrant.

L'invention sera bien comprise grâce à la description qui suivra en référence aux dessins annexés, dans lesquels :

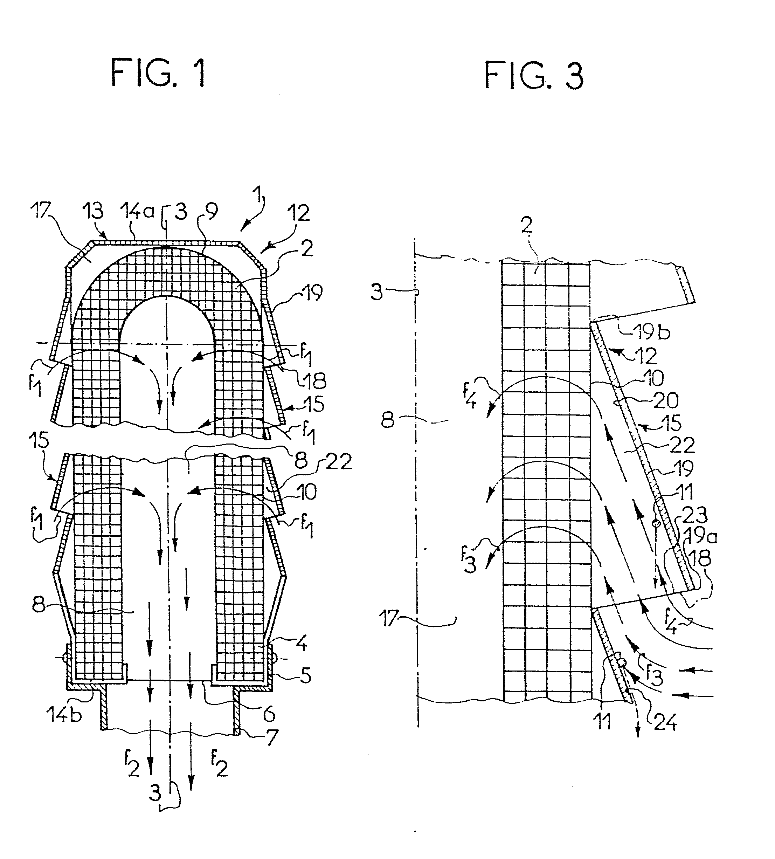

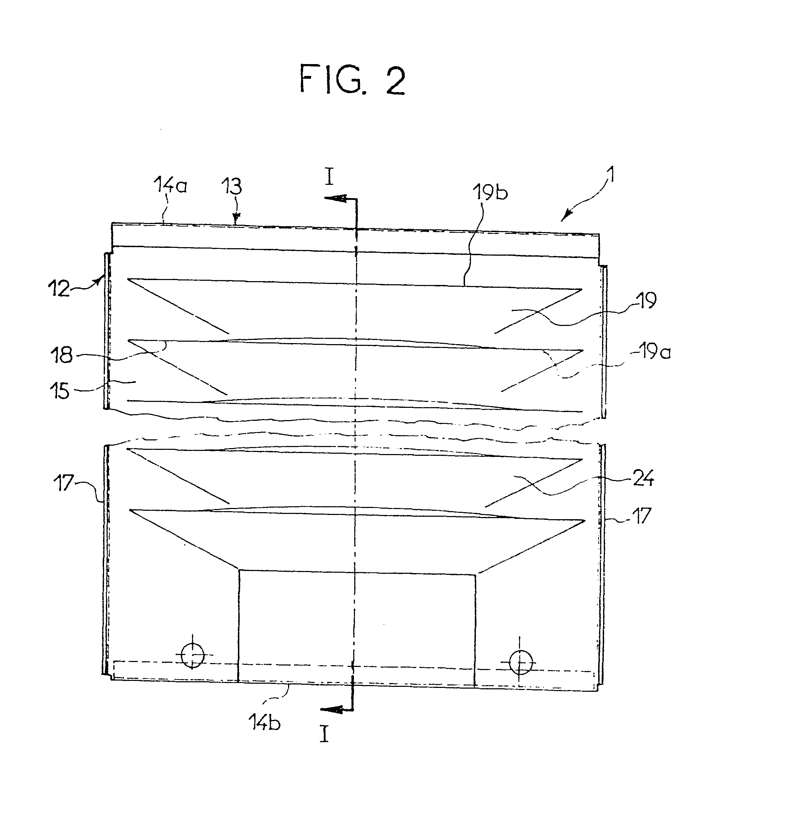

La figure 1 est une vue schématique, en coupe par un plan axial transversal, selon la ligne I-I de la figure 2, du filtre selon l'invention ; la figure 2 est une vue schématique, en élévation, du filtre suivant l'invention ; la figure 3 est une vue schématique, de détail, à plus grande échelle.

Le filtre 1 à fluide gazeux, notamment à air, selon l'invention comprend des moyens 2 pour retenir notamment les particules de poussières solides les plus fines véhiculées par le fluide gazeux à filtrer, constitués par un média filtrant de caractéristiques spécifiques (surface, épaisseur, texture, etc.) par exemple une matière poreuse, suffisamment épaisse, notamment textile ou plastique, de préférence suffisamment souple pour pouvoir prendre en section droite transversale (correspondant au plan de la figure 1), passant par un axe longitudinal 3, vertical ou au moins sensiblement vertical, notamment une forme générale de U renversé et, en élévation, (correspondant à un plan perpendiculaire à celui de la figure 1), une forme générale plane, rectangulaire, dont les branches verticales forment à leur partie extrême libre inférieure, une embase 4 pouvant être associée, notamment fixée dans un logement 5 approprié d'une pièce-support (ne faisant pas partie de l'invention),perforée d'un trou 6, inférieur et central, de passage du fluide gazeux filtré, fixée par des moyens appropriés à l'entrée d'air filtré, - notamment une conduite 7 - d'un appareil d'utilisation, notamment un brûleur à gaz. Naturellement, on peut concevoir d'autres formes de réalisation, d'exécution, de présentation et de montage des moyens 2. Par exemple, ceux-ci peuvent ne comporter que deux bandes longitudinales, le filtre étant totalement occulté latéralement et à la partie supérieure. Le média filtrant 2 ménage un évidement 8 pour le fluide gazeux filtré, interne, central, axial, de direction générale verticale, en communication avec l'appareil d'utilisation via le trou 6 uniquement, limité en premier lieu d'une part longitudinalement et en élévation de chaque côté et d'autre part dans son fond supérieur correspondant à la partie extrême libre supérieure du filtre par le média filtrant 2 et en second lieu latéralement (c'est-à-dire parallèlement au plan de la figure 1) et de chaque côté par le média filtrant 2 (comportant alors des retours latéraux, à cet effet) et/ou une plaque de fermeture. La communication entre le milieu extérieur où se trouve le fluide gazeux à filtrer et l'évidement 8, respectivement l'appareil d'utilisation n'est donc possible que et uniquement via le média filtrant 2. Des moyens d'obturation et/ou d'étanchéité non figurés, sont éventuellement prévus et montés judicieusement aux endroits nécessaires du filtre (par exemple à la jonction média filtrant 2-pièce support).

Le fluide gazeux à filtrer provient du milieu extérieur ; il atteint ensuite le média filtrant 2 et notamment sa surface extérieure 10, au moins sensiblement plane, longitudinale et verticale ; il traverse ensuite le média filtrant 2. Ce cheminement constitue un courant suivant les flèches f1 notamment incurvées à concavité tournée vers le bas pour être substantiellement verticales descendantes dans l'évidement 8. Ces particules véhiculées par le fluide gazeux à traiter sont arrêtées, au moins en ce qui concerne les plus fines, dans l'épaisseur du média filtrant lui-même selon les caractéristiques spécifiques de celui-ci et le débit de fluide gazeux à traiter c'est-à-dire la vitesse de pénétration de fluide gazeux à traiter dans le média filtrant. Le fluide gazeux est alors débarrassé des poussières et atteint ensuite l'évidement 8 puis traverse le trou 6 et atteint ensuite la conduite 7, pour alimenter l'appareil d'utilisation (flèche f2).

Le fluide gazeux à filtrer véhicule aussi des particules ou poussières solides plus grosses, telles que 11 (figure 3), qui normalement ne peuvent pas traverser le média filtrant 2, selon les caractéristiques spécifiques de celui-ci et auraient alors naturellement tendance à s'appliquer sur sa surface extérieure 10 et à colmater le filtre, en l'absence des moyens 12 selon l'invention, destinés notamment et en premier lieu à arrêter ces particules plus grosses, venant se combiner aux moyens 2.

Selon une forme de réalisation possible, non limitative de l'invention, les moyens 12 comprennent : un carter ou boîtier 13 venant coopérer par emboîtement de l'extérieur avec le média filtrant 2, notamment d'une forme générale complémentaire de la forme externe du média filtrant 2, comportant un premier fond 14a supérieur, plein, notamment au moins substantiellement horizontal, au moins au voisinage immédiat du fond 9 du média filtrant 2 et préférentiellement contre celui-ci ; un second fond 14b, inférieur, ouvert, au voisinage immédiat de l'embase 4, préférentiellement contre celle-ci, s'emboîtant par exemple dans le logement 5 et coopérant avec la pièce support ; deux parois longitudinales 15, verticales, de part et d'autre, coopérant, comme on le verra ultérieurement avec le média filtrant 2, notamment ses branches verticales et plus particulièrement sa surface extérieure 10 ; et deux parois latérales 17, de part et d'autre, associées d'une pièce rigidement aux fonds 14a, 14b et à la paroi 15, par exemple plane, au voisinage immédiat et préférentiellement contre le média filtrant 2 et/ou la plaque de fermeture.

Les parois longitudinales 15 et éventuellement les parois latérales 17 (notamment en cas d'absence de plaque de fermeture) comportent au moins une et préférentiellement plusieurs en particulier une suite de perforations 18, notamment sous la forme de fentes, de direction générale horizontale, s'étendant transversalement (figure 2) entre les parois 17, chacune fortement inclinée par rapport à la surface extérieure 10 du média filtrant 2, par exemple d'un angle de l'ordre de 90°.

6

Préférentiellement, les perforations 18 sont au moins sensiblement parallèles entre elles, et au moins sensiblement régulièrement écartées les unes des autres, chacune venant en correspondance d'une zone de la surface extérieure 10, donc du média filtrant 2. Selon une caractéristique de l'invention, l'ouverture de chaque perforation 18 est au plus égale à l'aire de la zone correspondante de la surface extérieure 10.Préférentiellement, l'ouverture de chaque perforation 18 est très sensiblement inférieure à l'aire de la zone correspondante de la surface extérieure 10, par exemple de l'ordre de la moitié ou du tiers de cette aire. Préférentiellement, chaque perforation 18 est légèrement inclinée sur l'horizontale, de bas en haut et de l'intérieur vers l'extérieur du filtre, par exemple de l'ordre de quelques degrés à 10° environ. Les perforations 18 sont par exemple définies et limitées par des plaques de déflection 19 inclinées notamment fortement sur l'horizontale, faisant par exemple un angle d'une dizaine de degrés sur la verticale, dirigées de haut en bas et de l'intérieur vers l'extérieur du filtre, adjacentes entre elles, le bord horizontal inférieur 19a d'une plaque de déflection 19 étant dans un plan horizontal au moins sensiblement coplanaire ou au voisinage du plan horizontal du bord horizontal supérieur 19b de la plaque de déflection 19 immédiatement placée en dessous. Les plaques 19 et les perforations 18 sont réalisées par exemple par découpage et emboutissage d'une plaque initialement plane ou tout autre procédé. Le média filtrant 2 vient par sa surface extérieure 10 en appui ou au moins au voisinage notamment immédiat des plaque de déflection 19, notamment sur ou au voisinage immédiat de leur bord horizontal supérieur 19b. Cette disposition détermine entre chaque face intérieure longitudinale 20 du carter ou boîtier 13, respectivement des plaques 19 et chaque surface extérieure 10 correspondante du média filtrant 2, une pluralité d'espaces libres 22 ayant chacun en section droite (dans le plan de la section en U du média filtrant, c'est-à-dire le plan des figures 1 et 2) une forme générale triangulaire ou de V renversé, ouvert sur son côté inférieur 23 à l'endroit de la fente 18, dont un côté correspond à la surface extérieure 10 et l'autre côté à une plaque 19, la pointe correspondant au bord 19b de la plaque. La section de cet espace 22, parallèlement au côté 23 va en diminuant régulièrement lorsqu'on s'éloigne du côté 23 en se rapprochant du bord 19b de la plaque correspondante, le long de la surface extérieure 10 du média filtrant 2.

Le fluide gazeux à filtrer chargé des particules à éliminer provenant du milieu extérieur ne peut accéder au filtre qu'en pénétrant dans les espaces libres 22 par les fentes 18 correspondantes avant que d'atteindre la surface extérieure 10 du média filtrant 2 selon les flèches f. Du fait de la position inclinée des fentes 18, le fluide gazeux suit nécessairement un trajet incurvé en chicane, notamment d'abord substantiellement horizontalement dans le milieu extérieur, par exemple, puis ascendant et incliné dans chaque espace 22, puis substantiellement horizontalement, plus ou moins incurvé à concavité tournée vers le bas, dans le média filtrant 2 et enfin vertical descendant dans l'évidement 8. Au cours de ce trajet, notamment au début, le fluide gazeux vient interférer avec la face extérieure 24 de chacune des plaques de déflection 19 et alors changer plus ou moins de direction à cet endroit ou dans cette zone. Les particules véhiculées par le fluide gazeux à filtrer et plus spécialement mais non exclusivement les particules 11 plus grosses, de plus grande masse, sont arrêtées par les plaques 19, notamment les faces extérieures 24 et subsidiairement les faces intérieures 20. Elles peuvent venir se plaquer sur les faces extérieures 24, éventuellement s'y accumuler plus ou moins. Préférentiellement, les faces extérieures 24 et éventuellement les faces intérieures 20 sont, selon l'invention, rendues non adhérentes ou au moins peu adhérentes pour les particules, notamment du fait que le carter ou boîtier 13 est en un matériau très lisse, par exemple en acier inoxydable. Les particules 11 éventuellement accumulées sur les plaques 19 finissent donc par glisser sur celles-ci puis tomber, par simple gravité hors des espaces libres 22, avant que d'avoir atteint la surface extérieure 10 du média filtrant 2 qui est ainsi protégé contre tout éventuel colmatage. L'arrêt des particules 11 est le cas échéant renforcé, à l'intérieur  même de chaque espace libre 22 par suite de phénomène de turbulence ou autre, pouvant s'y produire notamment au voisinage de la face intérieure 20 et/ou du bord 19b.

L'effet de déflection des plaques 19 est bien compris en se référant à la figure 3. Le trajet des filets de fluide gazeux entre une fente 18 et la surface extérieure 10 correspondante du média filtrant 2 va en augmentant lorsqu'on s'éloigne en s'élevant verticalement de la fente 18 le long de la surface extérieure 10 du média filtrant 2, donc entre des filets tels que ceux indiqués respectivement par les flèches $f_3$ et $f_4$ . D'autre part, la différence des aires entre les fentes 18 et la surface extérieure 10 provoque un gradient de la vitesse de pénétration du fluide gazeux donc une vitesse plus élevée  dans certaines zones notamment celles correspondant à des trajets tels que celui représenté schématiquement par les flèches $f_3$ et ses voisins.

Lorsque le média filtrant n'est pas colmaté on constate que le fluide gazeux et les particules qu'il véhicule, notamment les plus fines, pénètrent dans le média filtrant 2 de préférence et d'abord selon des trajets tels que ceux illustrés par les flèches $f_3$ et ses voisins, où la vitesse de pénétration est la plus élevée. La zone afférente du média filtrant 2 est alors active, sollicitée et mise en oeuvre d'autant mieux que la vitesse de pénétration a été ainsi augmentée, toutes choses égales par ailleurs. Les particules à éliminer sont donc essentiellement filtrées, arrêtées et stockées dans cette zone. Au contraire, les trajets tels que ceux illustrés par la flèche $f_4$ et ses voisins sont relativement passifs et moins sollicités à ce stade d'utilisation du média filtrant et recueillent donc moins de particules. Ultérieurement, les particules viennent se stocker dans la partie du média filtrant la plus sollicitée, jusqu'à encrassement de cette partie. C'est alors la partie du média filtrant moins encrassée et où la vitesse de pénétration est la plus élevée qui devient essentiellement active et ainsi de suite. Le média filtrant est ainsi mis en oeuvre de façon sectorielle, variable dans le temps, progressive, du fait du gradient de vitesse ainsi réalisé ce qui assure une durée de service plus longue et une meilleure utilisation du filtre.

Il est également clair que le carter ou boîtier 13 constitue en même temps des moyens de protection du média filtrant 2 non seulement contre les chocs en lui assurant des possibilités de montage et démontage aisées, mais en même temps contre l'empoussièrage en période de non fonctionnement du filtre.

Il est de toute évidence que la présente invention admet de nombreuses variantes d'exécution, mais qui n'affectent en rien son esprit inventif.

1

Revendications de brevet.

1. Filtre de dépoussièrage d'un fluide gazeux - notamment de l'air - comportant des moyens de retenue des particules les plus fines véhiculées par le fluide à filtrer et en combinaison avec eux des moyens d'arrêt des particules plus grosses pour les éliminer du fluide gazeux à filtrer avant qu'elles n'aient atteint la surface extérieure des moyens de retenue des particules plus fines, caractérisé par le fait que les moyens d'arrêt (12) constituent également, en combinaison avec les moyens de retenue (2), des moyens de déflection propres à créer un gradient de la vitesse de pénétration du fluide gazeux à filtrer dans les moyens de retenue (2), créant des trajets préférentiels de passage dans le média filtrant, ces trajets et de ce fait des zones de filtrations différentes étant mis en oeuvre de façon sectorielle et successive variable dans le temps et progressivement, pour assurer une durée de vie prolongée du filtre et sa meilleure utilisation.

2. Filtre selon 1 dont les moyens d'arrêt comprennent au moins une paroi d'un carter ou boîtier comportant au moins une perforation et au moins une plaque de déflection, caractérisé par le fait que les perforations (18) sont chacune fortement inclinée par rapport à la surface extérieure (10) du média fil- trant des moyens (2), notamment d'un angle de l'ordre de 90°, l'ouverture de chaque perforation (18) étant au plus égale à l'aire de la zone correspondante de la surface extérieure (10) et préférentiellement très sensiblement inférieure à celle-là, notamment de l'ordre de la moitié ou du tiers de cette aire.

3. Filtre selon 1 ou 2, caractérisé par le fait que chaque perforation (18) est légèrement inclinée sur l'horizontale, de bas en haut et de l'intérieur vers l'extérieur du filtre, notamment de l'ordre de quelques degrés à 10° environ et les

2

plaques de déflection (19) inclinées fortement sur l'horizontale, faisant notamment un angle d'une dizaine de degrés sur la verticale, dirigées de haut en bas et de l'intérieur vers l'extérieur du filtre, le bord horizontal inférieur (19a) d'une plaque de déflection (19) étant dans un plan horizontal au moins sensiblement coplanaire ou au voisinage du plan horizontal du bord horizontal supérieur (19b) de la plaque de déflection (19) immédiatement placée en dessous.

4. Filtre selon 1 à 3, caractérisé par le fait que la face extérieure (24) et/ou la face intérieure (20) d'une plaque de déflection (19) est au moins peu adhérente aux particules véhiculées par le fluide gazeux à filtrer, notamment du fait que le carter ou boîtier (13) est en un matériau très lisse.

0017590

1/2

FIG. 1

FIG. 3

FIG. 2

**Office européen des brevets**

**RAPPORT DE RECHERCHE EUROPEENNE**

Numéro de la demande
EP 80 40 0455

## DOCUMENTS CONSIDERES COMME PERTINENTS

| Catégorie | Citation du document avec indication, en cas de besoin, des parties pertinentes | Revendication concernee |
|---|---|---|
| | FR - A - 2 109 085 (BERTIN & CIE) <br> * Figures 1,2; page 2, lignes 12-28 * | 1 |
| | -- | |
| | DE - A - 2 738 521 (DONALDSON) <br> * Figure 1; page 17, dernier alinéa jusqu'à la page 18, avant-dernier alinéa * | 1,2,3 |
| | -- | |
| A | FR - A - 2 374 599 (R. PERCEVAUT) | |
| A | FR - A - 926 986 (HOUDAILLE-HERSHEY) | |
| A | FR - A - 926 006 (HOUDAILLE-HERSHEY) | |
| A | US - A - 3 992 177 (C. WELTEROTH) | |
| | ---- | |

### CLASSEMENT DE LA DEMANDE (Int. Cl. 3)

B 01 D 50/00
F 24 F  3/16

### DOMAINES TECHNIQUES RECHERCHES (Int. Cl. 3)

B 01 D 50/00
        45/00
        46/00
F 24 F  3/00

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 05-06-1980 | BOGAERTS |

OEB Form 1503.1   06.78